Europäisches Patentamt

European Patent Office

Office européen des brevets

(19)

(11) Numéro de publication: **0 208 594**
**B1**

(12) **FASCICULE DE BREVET EUROPEEN**

(45) Date de publication du fascicule du brevet: **16.01.91**

(51) Int. Cl.⁵: **G 07 B 15/02, H 04 Q 9/00**

(21) Numéro de dépôt: **86401382.6**

(22) Date de dépôt: **24.06.86**

(60) Demande divisionnaire 90101535.4 déposée le 24/06/86.

(54) Système d'interconnexion de bornes à mémoire.

(30) Priorité: **02.07.85 FR 8510058**

(43) Date de publication de la demande:
**14.01.87 Bulletin 87/03**

(45) Mention de la délivrance du brevet:
**16.01.91 Bulletin 91/03**

(84) Etats contractants désignés:
**BE DE GB IT NL SE**

(56) Documents cités:
**EP-A-0 044 685**
**EP-A-0 092 895**
**GB-A-2 148 035**
**US-A-4 007 450**
**US-A-4 176 401**
**US-A-4 379 334**

(73) Titulaire: **SCHLUMBERGER INDUSTRIES**
**50, avenue Jean Jaurès**
**F-92120 Montrouge (FR)**

(72) Inventeur: **Lachat, Claude**
**12 A, rue Eugène Savoye**
**F-25000 Besançon (FR)**
Inventeur: **Ferrus, Joele**
**11, chemin du Préventorium**
**F-25000 Besançon (FR)**

(74) Mandataire: **Dronne, Guy et al**
**Cabinet BEAU de LOMENIE, 55, rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 208 594 B1

**Description**

La présente invention a pour objet un système d'interconnexion de bornes à mémoire notamment de bornes de stationnement payant pour véhicules.

En raison de l'accroissement considérable de la densité du parc automobile, en particulier dans les grandes agglomérations, le problème du stationnement des véhicules automobiles est devenu de plus en plus aigu. Pour dissuader les automobilistes de laisser trop longtemps leurs véhicules en stationnement à un même emplacement, on a limité la durée maximale autorisée de stationnement sous peine de sanctions et on a progressivement implanté des zones à stationnement non seulement réglementé mais encore payant, le prix à acquitter dépendant de la durée de stationnement souhaitée jusqu'à concurrence d'une durée maximale.

Pour gérer ce stationnement payant, en voirie, on a mis en place sur les trottoirs des parcmètres permettant de contrôler deux emplacements de stationnement adjacents. Chaque automobiliste doit introduire dans une fente du parcmètre des pièces de monnaie pour un montant correspondant au temps de stationnement désiré. Un mécanisme comportant un mouvement horaire permet de commander un index mobile dont la position correspond au temps de stationnement encore autorisé. Le contrôle de ces parcmètres par les préposés à la surveillance est simple mais le défaut de tels parcmètres réside dans le fait qu'il faut un parcmètre pour deux emplacements de stationnement. Cela en multiplie le nombre et rend beaucoup plus couteuse la collecte des pièces de monnaie introduites dans ces machines.

C'est pourquoi on a proposé de nouveaux appareils de gestion de stationnement payant appelés "bornes de stationnement". Chaque borne est capable de gérer une douzaine d'emplacements de stationnement disposés à proximité de la borne. Ces bornes sont bien connues du moins en France. L'automobiliste qui veut stationner son véhicule sur l'un des emplacements gérés par la borne introduit dans la fente de celle-ci des pièces de monnaie pour un montant dépendant du temps de stationnement souhaité. La borne comprend une horloge et des circuits électroniques de traitement pour commander notamment un dispositif d'impression de tickets. Sur ce ticket sont essentiellement mentionnées la date, l'heure limite de stationnement autorisé, ainsi que des informations de localisation. L'automobiliste doit placer en évidence ce ticket derrière son pare-brise afin que le préposé à la surveillance puisse contrôler la régularité du stationnement.

La surveillance du stationnement géré par de telles bornes requiert un certain temps puisque le préposé doit vérifier les indications portées sur le ticket placé derrière le pare-brise des véhicules, l'emplacement du ticket pouvant bien sûr être différent d'un véhicule à l'autre.

Pour remédier à cet inconvénient on a proposé dans la demande de brevet EP—A—206 884 déposée au nom du demandeur un nouveau type de bornes de stationnement permettant de simplifier la gestion et la surveillance du stationnement. Chaque borne comporte un clavier à l'aide duquel l'automobiliste désirant laisser en stationnement son véhicule sur un des emplacements gérés par la borne introduit le numéro d'immatriculation de son véhicule ou le numéro d'emplacement de stationnement. Les circuits électroniques de la borne comportent en particulier une mémoire où sont stockés des couples d'informations correspondant à une information d'identification du véhicule et à une heure limite de stationnement autorisé, cette heure limite étant déterminée à partir d'un montant en pièces de monnaie introduites dans la borne ou d'un montant prélevé dans la mémoire d'une carte à mémoire du type carte de crédit. Lorsque le préposé veut procéder au contrôle des véhicules en stationnement dans la zone contrôlée par la borne, il lui suffit par un moyen convenable, de rechercher dans cette mémoire si le numéro d'immatriculation d'un véhicule effectivement en stationnement y figure et éventuellement de contrôler l'heure de stationnement limite associée. Une telle solution est plus simple pour l'automobiliste qui n'a plus à manipuler le ticket et pour le préposé à la surveillance qui n'a plus qu'à interroger la mémoire de la borne.

Dans le cas de voies publiques importantes ou dans le cas de vastes parcs de stationnement du type de ceux qu'on rencontre à proximité des centres commerciaux, il est nécessaire, pour la commodité des automobilistes, de prévoir un grand nombre de bornes de stationnement. Cependant cette commodité n'est que partielle car chaque emplacement de stationnement est géré par une borne donnée dans laquelle les couples d'informations sont mémorisés. Cela impose donc à l'automobiliste de passer devant cette borne même si son chemin le fait passer normalement devant une autre borne. De plus, si l'automobiliste veut prolonger son temps de stationnement il doit retourner à la borne en question pour introduire de nouvelles pièces de monnaie ainsi que son information d'identification. De même, le préposé à la surveillance du stationnement doit commencer par se rendre à la borne gérant la zone de stationnement qu'il veut contrôler, avant de procéder au contrôle effectif des véhicules en stationnement dans cette zone, ce qui représente une perte de temps.

Dans le cas de bornes de stationnement classiques, c'est-à-dire celles qui ne comportent pas de clavier et délivrent un ticket servant au contrôle du stationnement, la machine comprend des circuits électroniques de traitement pour le décompte des pièces de monnaie, pour le calcul de l'heure limite de stationnement autorisée, pour la commande de l'imprimante, etc. Il est souvent prévu que les circuits électroniques de traitement comportent de plus une mémoire pour y stocker des informations telles que le nombre de véhicules en stationnement par jour, le montant des taxes de stationnement acquittées, la durée moyenne de stationnement acquitté, etc. Ces informations sont périodiquement prélevées dans la mémoire de la borne pour leur exploitation statistique. Comme une zone de stationnement est gérée par plusieurs bornes de stationnement indépendantes il est nécessaire d'effectuer ce prélèvement successivement dans la mémoire de chaque borne et donc de munir chaque borne de moyens pour affecter ce prélèvement: transmission filaire, transmission par infrarouge, etc.

On connaît également des bornes ou machines de distribution de tickets qui délivrent des titres de transport après sélection du titre de transport désiré (destination, demi-tarif, etc.) et introduction du montant correspondant à l'aide de pièces de monnaie. Ces bornes de distribution de tickets peuvent comporter en plus des circuits électroniques de traitement, une mémoire dans laquelle on peut mémoriser les données correspondant aux opérations effectuées. Il est intéressant de relever ces données périodiquement pour contrôler l'état de fonctionnement de la borne ou pour faire un traitement statistique de ces données. Cependant, dans les grandes gares il est nécessaire de prévoir un grand nombre de bornes pour la commodité des usagers.

Lorsque l'on peut prélever les données mémorisées dans ces bornes ou contrôler leur fonctionnement, il faut effectuer cette opération successivement sur chaque borne. Cela augmente singulièrement le temps de prélèvement et complique la structure de la machine puisque chacune doit comporter des moyens de prélèvement.

On a aussi proposé dans la demande de brevet européenne EP—A 044685 un système de transmission de données entre une borne centrale et un certain nombre de bornes périphériques. Ce système comprend un circuit de transmission reliant entre elles toutes les bornes du système, mais seule la borne centrale par l'intermédiaire de ses circuits de traitement, peut alimenter le circuit de transmission, peut interroger une et une seule à la fois des bornes périphériques pour recevoir en retour le ou les données mémorisées dans le circuit mémoire de la borne périphérique interrogée. Pour prélever les données mémorisées dans les autres bornes périphériques, la borne centrale doit interroger une à une chacune de ces bornes.

Un objet de l'invention est de fournir un système de bornes à mémoire pour le stationnement payant ou pour la délivrance de titres de transport qui ne présente pas les inconvénients rappelés ci-dessus.

Pour atteindre ce but, selon l'invention, le système d'interconnexion de bornes à mémoire comportant chacune des moyens pour traiter et mémoriser des informations, se caractérise en ce qu'il comprend:

des moyens pour relier entre elles lesdites bornes, lesdits moyens de liaison comprenant des moyens formant circuit de réveil aptes à provoquer, en réponse à l'introduction d'une information dans une desdites bornes, l'activation desdits circuits de traitement et desdites mémoires des autres dites bornes;

des moyens pour transmettre, par lesdits moyens de liaison, l'ensemble des informations mémorisées dans chacune desdites bornes vers au moins une desdites bornes, lesdits moyens de transmission comprenant des moyens formant circuit de transfert, ledit circuit de transfert comprenant pour chaque borne des moyens pour transmettre les informations mémorisées dans ladite borne vers au moins une desdites bornes; et

des moyens pour interrompre ladite transmission dès que l'ensemble desdites informations mémorisées dans chacune desdites bornes ont été transmises vers au moins une desdites bornes.

On comprend ainsi qu'au moins une borne du système peut recueillir l'ensemble des informations utiles introduites dans l'une quelconque des autres bornes. De plus, la liaison n'existe que lorsqu'il y a une transmission d'informations à effectuer.

De préférence toutes les bornes à mémoire jouent le même rôle et les informations introduites dans l'une quelconque desdites bornes sont transmises sensiblement au fur et à mesure de leur introduction et mémorisées dans toutes les autres bornes.

Ces bornes, qu'il s'agisse des bornes de stationnement ou des bornes de distribution de tickets, sont autonomes quant à leur alimentation électrique. La structure micro-programmée des bornes n'est alimentée que pour assurer les fonctions de traitement d'un usager, l'élaboration d'un ticket, etc. Les informations fondamentales sont entretenues par une alimentation secourue.

Pour conserver cet avantage, de préférence le mode de liaison et de transmission est tel qu'il ne consomme de l'énergie électrique que lors de la transmission d'une information d'une borne vers les autres bornes.

Pour cela, lesdites bornes sont insérées dans une boucle de connexion, comportant des moyens de liaison de réveil et des moyens de liaison pour la transmission de données, les moyens de liaison de réveil comportant pour chaque borne des moyens sensibles à une opération effectuée sur une borne et aptes à provoquer le réveil de toutes les bornes de la boucle, et l'alimentation en énergie électrique de la liaison de transmission de données ainsi que les circuits des autres bornes.

Selon un mode préféré de mise en oeuvre de l'invention, les bornes sont des bornes pour la gestion du stationnement payant des véhicules.

D'autres caractéristiques ou avantages de l'invention apparaîtront plus clairement à la lecture de la description qui suit de plusieurs modes de réalisation donnés à titre d'exemples non limitatifs. La description se réfère au dessin annexé sur lequel:

la figure 1 est un schéma général montrant un ensemble de bornes de stationnement faisant partie d'une même boucle d'interconnexion;

la figure 2 est un schéma simplifié montrant la liaison de "réveil" et la liaison de transmission de données pour une seule boucle de connexion selon un premier mode de réalisation de l'invention;

la figure 3 est un schéma semblable à celui de la figure 2 mais montrant l'interconnexion entre deux boucles de liaison;

la figure 4 est un schéma analogue à celui de la figure 2, mais montrant une variante de réalisation;

la figure 5 montre un exemple de réalisation de borne de stationnement à mémoire adaptée pour être interconnectée dans ladite boucle.

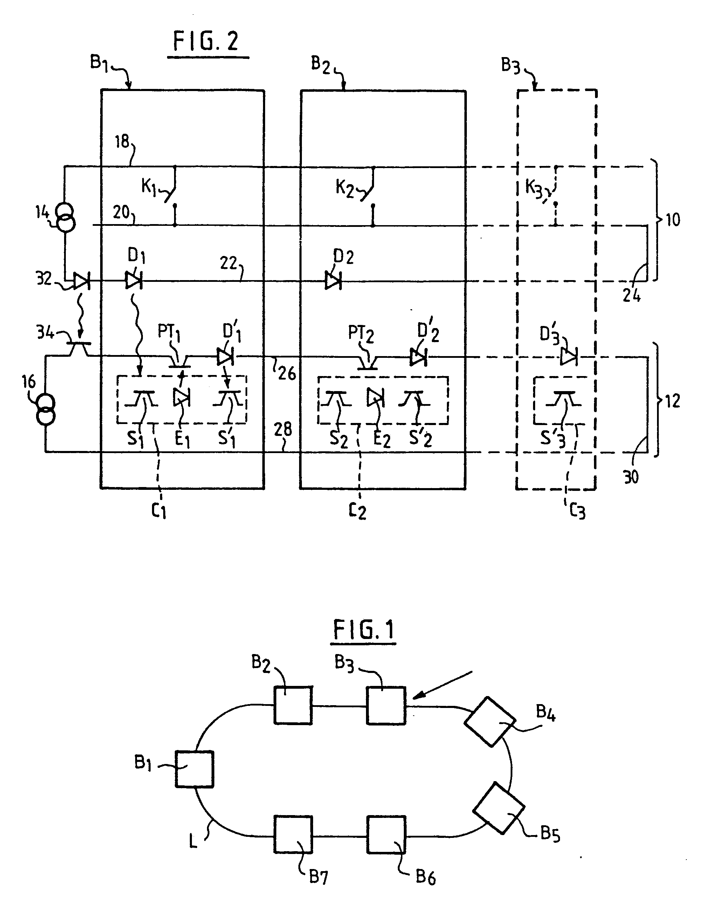

En se référant tout d'abord à la figure 2 on va décrire la structure de base des liaisons permettant le transfert des informations entre les différentes bornes de stationnement. Sur la figure 2 on a appelé $B_1$, $B_2$, $B_3$, etc. les différentes bornes de stationnement reliées entre elles, et $C_1$, $C_2$, etc. les circuits de traitement et de mémorisation de ces bornes.

La liaison entre les bornes est constituée par une boucle de réveil 10 et une boucle de transmission données 12. L'ensemble de cette liaison est alimentée par des sources de courant 14 et 16 respectivement pour la boucle de réveil 10 et pour la boucle de transmission 12.

La boucle de réveil est constituée par 3 fils conducteurs 18, 20 et 22 qui traversent les bornes de stationnement. La source de courant 14 est montée entre les premières extrémités des lignes 18 et 22, tandis que les autres extrémités des lignes 20 et 22 sont court-circuitées en 24.

Dans chaque borne $B_1$, $B_2$, etc. est inséré un interrupteur $K_1$, $K_2$, etc. entre les lignes 18 et 20 et une diode photo-émettrice $D_1$ (respectivement $D_2$), montée sur la ligne 22.

La boucle de transmission de données 12 comprend les lignes 26 et 28. La source de courant 16 est montée entre les premières extrémités des lignes 26 et 28 alors que les deuxièmes extrémités de ces mêmes lignes sont court-circuitées en 30. Dans chaque borne sur la ligne 26, sont insérés un photo-transistor $PT_1$ (respectivement $PT_2$ ...) et une diode photo-émettrice $D'_1$ (respectivement $D'_2$ ...). En outre sur la ligne 22 de la boucle de réveil et sur la ligne 26 de la boucle de transmission sont respectivement montés une diode photo-émettrice 32 et un photo-transistor 34 disposés en regard.

Enfin, chaque circuit de traitement $C_1$ (respectivement $C_2$) comprend des photo-transistors $S_1$ et $S'_1$ (respectivement $S_2$, $S'_2$) pour coopérer avec les diodes $D_1$ et $D'_1$ (respectivement $D_2$ et $D'_2$) et une diode photo-émettrice $E_1$ (respectivement $E_2$) pour coopérer avec le photo-transistor $PT_1$ (respectivement $PT_2$).

Le fonctionnement de cette liaison est le suivant. En l'absence d'opération effectuée par un automobiliste sur les bornes $B_1$, $B_2$ ..., les interrupteurs $K_1$, $K_2$ ... sont ouverts. La boucle de réveil 10 est donc également ouverte ainsi que la boucle de transmission de données 12.

Lorsqu'une donnée est introduite dans le circuit de traitement d'une borne, par exemple le circuit $C_2$ de la borne $B_2$, le commutateur correspondant $K_2$ se ferme, ce qui ferme également la boucle de réveil 10.

Le générateur de courant 14 fait circuler dans cette boucle un courant, par exemple, de 20 mA. Les diodes 32, $D_1$, $D_2$, etc., sont activées. La lumière émise par la diode 32 est reçue par le photo-transistor 34 ce qui ferme la boucle de transmission 12 dans laquelle la source de courant 16 fait circuler un courant alimentant en particulier les diodes $D'_1$, $D'_2$, etc. et les photo-transistors $PT_1$, $PT_2$, etc. Simultanément le faisceau lumineux émis par la diode $D_1$ (respectivement par la diode $D_2$) est recueilli par le photo-transistor $S_1$ du circuit $C_1$ (respectivement $S_2$ du circuit $C_2$) provoquant l'alimentation des circuits $C_1$ (respectivement $C_2$) et notamment des diodes $E_1$ (respectivement $E_2$) et des photo-transistors $S'_1$ (respectivement $S'_2$).

On voit que dans cette situation la boucle de transmission de données 12 et les circuits $C_1$, $C_2$ des bornes $B_1$, $B_2$, etc. sont alimentés permettant la transmission effective des données. Dans l'exemple considéré les données ont été introduites dans le circuit $C_2$ de la borne $B_2$. Selon une procédure qui sera décrite ultérieurement les données introduites dans le circuit $C_2$ sont appliquées sur la ligne 26 par le coupleur optique formé par la diode émettrice $E_2$ et le photo-transistor $PT_2$. Ces informations sont introduites dans tous les circuits $C_1$, $C_3$, etc. des bornes $B_1$, $B_3$ par les coupleurs électro-optiques formés par les composants $D'_1$, $S'_1$, $D'_3$, $S'_3$, etc. Lorsque cette transmission a été effectuée, l'interrupteur $K_2$ est ouvert à nouveau, ce qui ouvre les boucles de réveil 10 et de transmission de données 12. Les générateurs de courant 14 et 16 ne débitent donc plus.

En se référant maintenant à la figure 1 on va décrire plus en détails la procédure de transfert des informations entre les bornes de stationnement. Sur cette figure on a appelé $B_1$, $B_2$—$B_7$ les bornes de stationnement montées dans une même boucle et on a figuré par un simple trait référencé L la liaison entre les bornes, étant entendu qu'en fait cette liaison à la structure représentée sur la figure 2, avec une boucle de réveil et une boucle de transmission de données. Dans la description qui suit on suppose que des données viennent d'être introduites dans la borne $B_3$, marquée d'une flèche sur la figure 1, ces données devant être transmises à d'autres bornes.

On va d'abord supposer qu'aucune transmission de données n'est en cours, c'est-à-dire que les boucles de réveil et de transmission ne sont pas alimentées. L'introduction des données provoque la fermeture de l'interrupteur $K_3$ de la borne $B_3$. En effet, si de nouvelles informations ont été introduites dans la borne $B_3$, c'est qu'un automobiliste à utilisé la borne en y insérant sa carte magnétique ou en actionnant le clavier selon les types de bornes. Cette action provoque l'alimentation des circuits de la borne $B_3$, ce qui commande la fermeture de l'interrupteur $K_3$ à la fin de l'utilisation de la borne par l'automobiliste. Il en résulte l'alimentation de l'ensemble de la boucle et des circuits des autres bornes par le processus décrit en liaison avec la figure 2.

Avant la première communication, une temporisation d'attente est déclenchée pour pallier aux montées d'alimentation des microprocesseurs constituant la partie principale des circuits $C_i$ des bornes, puis la procédure de transmission d'informations se déroule de la manière suivante, selon un protocole séquentiel.

Le "droit à la parole" se fait selon un ordre préétabli entre les bornes, par exemple $B_1$, $B_2$ ... $B_7$.

Si la borne $B_1$ n'a rien à transmettre, elle passe son droit à la parole à la borne $B_2$ en signalant son état de fonctionnement et ainsi de suite. Le cycle se déroule jusqu'à ce que la borne $B_3$ qui a provoqué le réveil de la boucle ait "la parole". La borne $B_3$ transmet ses informations sur la boucle de transmission de données par les ensembles opto-coupleurs déjà décrits. Ces informations sont reçues successivement par les bornes $B_4$ ... $B_7$, $B_1$ et $B_2$ qui délivrent après réception, un message d'acquittement. En cas de non acquittement deux re-émissions des informations sont possibles. Après la réception des messages d'acquittement le circuit $C_3$, commande l'ouverture de l'interrupteur $K_3$ de la borne $B_3$. Si aucun interrupteur $K_i$ n'a été fermé pendant ce cycle, la boucle de réveil n'est plus alimentée. Au contraire si pendant ce cycle une autre borne a reçu des informations à transmettre l'interrupteur $K_i$ de la borne $B_i$ correspondante s'est fermé et le cycle d'interrogations se poursuit jusqu'à la borne qui a des informations à transmettre, ce qui fait démarrer un nouveau cycle.

Si, lorsque l'interrupteur $K_3$ de la borne $B_3$ se ferme, une autre borne est déjà en train de transmettre des informations aux autres bornes, cette situation est détectée par le circuit $C_3$, puisque les boucles de réveil et de transmission de données sont déjà alimentées. La borne $B_3$ ne transmettra ses propres données que lorsque tous les messages d'acquittement auront été émis par la borne $B_3$ et toutes les autres bornes.

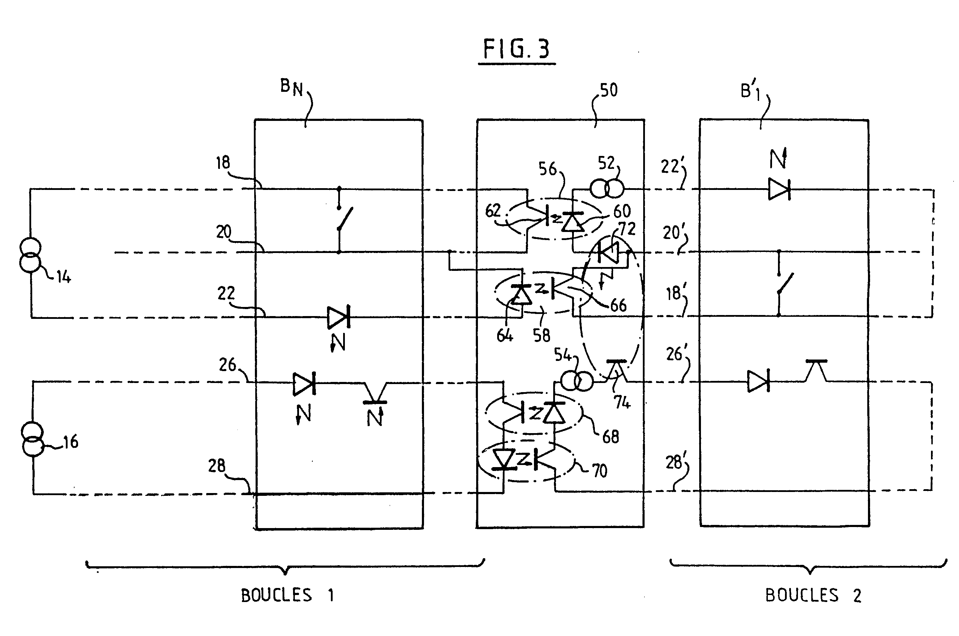

Dans la description précédente, on a envisagé le cas d'une seule boucle dans laquelle sont montées les bornes de stationnement $B_i$. Cependant les boucles de courant ont une portée limitée, liée à la nature des câbles utilisés, à la vitesse de transmission, aux générateurs de courant, etc. En conséquence, il peut être intéressant de prévoir plusieurs boucles de transmission reliées entre elles pour assurer la transmission des informations entre les bornes de stationnement montées dans les différentes boucles interconnectées. La figure 3 montre un circuit d'interconnexion de deux boucles. Sur la figure 3, $B_N$ représente la dernière borne d'une première boucle et $B'_1$ la première borne d'une deuxième boucle. Pour la première boucle on retrouve les lignes 18, 20 et 22 du circuit de réveil et les lignes 26 et 28 du circuit de transmission de données. Pour la deuxième boucle on trouve les lignes 18', 20', 22' et 26', 28' correspondant respectivement aux lignes 18, 20, 22 et 26, 28. Sur cette figure on a référencé 50 le circuit d'interconnexion des deux boucles.

Le circuit d'interconnexion 50 comprend deux générateurs de courant 52 et 54 jouant, pour la deuxième boucle, le même rôle que les générateurs de courant 14 et 16 de la première boucle. Le générateur 52, pour le circuit de réveil, est monté à l'extrémité de la ligne 22', tandis que le générateur 54, pour le circuit de transmission de données est monté à l'extrémité de la ligne 26'. La liaison entre les circuits de réveil des deux boucles est réalisée par deux coupleurs opto-électroniques 56 et 58. Le coupleur 56 est constitué par une diode électro-luminescence 60 montée entre le générateur de courant 52 et la ligne 20' et par un photo-transistor 62 monté entre les lignes 18 et 20. Quant au coupleur 58 il est constitué par une diode électro-luminescente 64 monté entre les lignes 20 et 22 et part un photo-transistor 66 monté entre les lignes 18' et 20'.

La liaison entre les deux circuits de transmission de données est assurée par deux coupleurs opto-électroniques 68 et 70 montés tête-bêche entre les extrémités des lignes 26, 28 et 26', 28'. Enfin un autre coupleur opto-électronique constitué par la diode photo-émettrice 72 et le photo-transistor 74, similaire au coupleur de la figure 2 constitué par les composants 32 et 34, assure la fermeture du circuit de transmission de données (26', 28') lorsque le circuit de réveil est alimenté.

Le fonctionnement du circuit de couplage 50 découle clairement de la description précédente. Si un interrupteur $K_i$ de la première boucle est fermé le courant qui circule dans le circuit de réveil de la première boucle active le coupleur 58 qui commande la circulation de courant dans le circuit de réveil de la deuxième boucle. Le coupleur 56 assure la fonction symétrique si c'est un interrupteur $K'_i$ de la deuxième boucle qui se ferme. En ce qui concerne la transmission des informations, les deux circuits de transmission de données sont reliés dans un sens et dans l'autre par les deux opto-coupleurs 68 et 70.

En utilisant d'autres circuits d'interconnexion identiques au circuit 50 de la figure 3 il serait possible de relier entre elles d'autres boucles, chaque boucle possèdant ses deux générateurs de courant respectivement pour le circuit de réveil et pour le circuit de transmission des données.

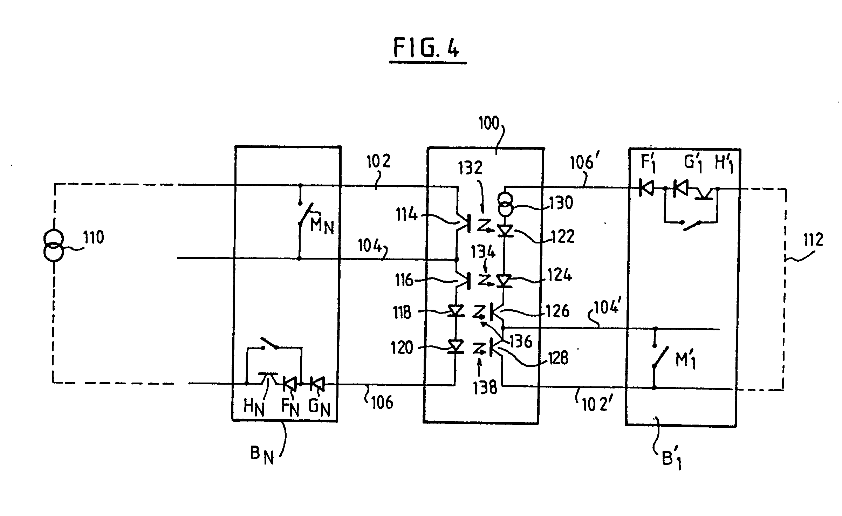

La figure 4 montre une variante de réalisation d'une boucle de liaison entre deux bornes de stationnement et d'interconnexion entre deux boucles de liaison.

Dans la solution décrite en regard des figures 2 et 3 la liaison entre deux bornes de stationnement nécessite 5 conducteurs électriques. La figure 4 montre une variante de réalisation ne nécessitant que trois fils pour effectuer cette liaison, les circuits de réveil et de transmission de données étant imbriqués.

Sur la figure 4 on a représenté la borne de stationnement $B_N$, qui est la dernière de la première boucle de liaison, la borne $B'_1$ qui est la première de la deuxième boucle de liaison et le circuit 100 d'interconnexion de ces deux boucles. Pour la première boucle on trouve les conducteurs 102, 104 et 106 et pour la deuxième boucle les conducteurs 102', 104' et 106'. Au niveau de la borne $B_N$ on trouve un interrupteur $M_N$ monté entre les conducteurs 102 et 104, et des diodes électro-luminescentes $F_N$, $G_N$ et un photo-transistor $H_N$ montés en série sur la ligne 106.

Au niveau de la borne $B'_1$ on trouve de façon similaire l'interrupteur $M'_1$ monté entre les conducteurs 102' et 104' et les diodes électroluminescentes $F'_1$, $G'_1$ et le photo-transistor $H'_1$ montés en série sur la ligne 106'. Les premières extrémités des conducteurs 102 et 106 de la première boucle sont reliées aux bornes d'un générateur de courant 110, alors que les deuxièmes extrémités des conducteurs 102' et 106' sont court-circuitées en 112.

Le circuit d'interconnexion 100 des deux boucles comprend un photo-transistor 114 monté entre les deuxièmes extrémités des conducteurs 102 et 104, et un photo-transistor 116 ainsi que deux diodes photo-émettrices 118 et 120 montés en série entre les deuxièmes extrémités des conducteurs 104 et 106 de la première boucle. Le circuit 100 comprend également un phototransistor 128 monté entre les premières extrémités des conducteurs 102' et 104' de la deuxième boucle, et les diodes électroluminescentres 124 et 122 ainsi que le photo-transistor 126 monté entre les lignes 104' et 106'. En outre, un générateur de courant 130 est monté en série sur le conducteur 106'.

Les composants opto-électroniques 114 à 128 sont associés deux à deux pour former 4 coupleurs optiques 132, 134, 136 et 138 constitués respectivement par les composants 114 et 122, 116 et 124, 118 et 126, et 120 et 128.

Le fonctionnement de l'ensemble du circuit de la figure 4 est le suivant:

Lorsqu'aucun des interrupteurs $M_i$ ou $M'_i$ des première et deuxième boucles n'est fermé, il ne circule aucun courant dans ces boucles et aucun des circuits de traitement des bornes de stationnement (non représentés sur la figure 4) n'est alimenté. Si une des bornes a des données à transmettre aux autres bornes, l'interrupteur $M_i$ ou $M'_i$ qui lui est associé est fermé. On suppose qu'il s'agit de l'interrupteur $MN$ de la première boucle. La fermeture de cet interrupteur entraîne la circulation d'un courant dans la première boucle. La circulation de ce courant active les diodes électroluminescentes $F_i$ ce qui commande l'alimentation des circuits des bornes de stationnement $B_1$ à $BN_1$. De même la circulation de ce courant provoque l'activation du coupleur 138 entraînant le réveil de la deuxième boucle. Le réveil de la deuxième boucle a pour effet d'activer les diodes électroluminescentes $F'_i$ des bornes $B'_i$ qui commandent à leur tour l'alimentation des circuits des bornes $B'_i$. Dans cette situation l'ensemble des deux boucles et des circuits de traitement des bornes des deux boucles sont alimentées, ce qui autorise le transfert des informations entre les bornes $B'_i$ et $B_i$ selon la procédure déjà décrite en liaison avec la figure 1.

Si c'est une borne de la deuxième boucle qui a une information à transmettre, par exemple la borne $B'_1$ on a le processus symétrique de celui qui vient d'être décrit. La fermeture de l'interrupteur $M'_1$ provoque la circulation d'un courant dans la deuxième boucle.

Cette circulation de courant entraîne d'une part d'alimentation des circuits des autres bornes de la deuxième boucle par l'intermédiaire des diodes $F'_i$ et le réveil de la première boucle par l'intermédiaire du coupleur optique 132. Le réveil de la première boucle commandant à son tour l'alimentation des circuits de traitement des bornes $B_i$ de la première boucle.

Il y a lieu de préciser que selon ce deuxième mode de réalisation, du fait que les circuits de réveil et de transmission de données sont superposés il faut que les circuits de traitement des bornes de stationnement soient capables de ne pas interpréter les signaux transitoires comme des données, et les données comme des arrêts de boucles de liaison.

Dans la description précédente le couplage entre les boucles et le couplage entre une boucle et les circuits est réalisé par des coupleurs optiques. Ces couplages pourraient être réalisés à l'aide de coupleurs magnétiques, de coupleurs électro-magnétiques, des coupleurs capacitifs, des coupleurs inductifs, etc.

Lorsque les bornes de stationnement ne comportent pas de clavier, le transfert des informations a pour but de rassembler à une même borne la totalité des informations en vue de leur traitement statistique. Deux cas peuvent se présenter: soit la totalité des informations doit être rassemblée dans la mémoire de chaque borne de stationnement; soit une borne particulière est spécialisée pour recueillir l'ensemble des informations.

Dans le premier cas le fonctionnement est exactement celui qui a été décrit en liaison avec les figures 1 à 4. Un cycle de transfert est déclenché à chaque fois qu'un automobiliste introduit des pièces de monnaie pour laisser son véhicule en stationnement. La délivrance du ticket par la borne provoque la fermeture de l'interrupteur $K_i$ de la borne ce qui provoque le début d'un cycle.

Dans le deuxième cas le fonctionnement est un peu différent. Seule la borne qui doit recueillir les informations comporte un interrupteur $K_i$. Lorsqu'on veut recueillir les informations, on actionne un organe spécifique de la borne pour fermer son interrupteur $K_i$ ce qui a pour effet d'alimenter le circuit de transfert de données et les circuits de traitement des autres bornes de stationnement. La borne principale interroge successivement chacune des autres bornes, qui transmettent successivement les informations que contiennent leurs mémoires vers la mémoire de la borne principale. Il suffirait alors au préposé de prélever

par tout moyen convenable dans la mémoire de la borne principale les informations qui y ont été rassemblées.

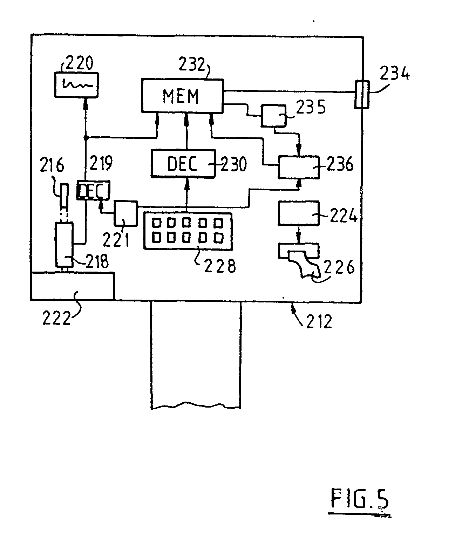

En se référant à la figure 5, on va décrire plus en détail un exemple de réalisation de borne de stationnement susceptible d'être montée dans le système d'interconnexion selon l'invention.

Comme cela est bien connu, la borne 212 comporte une fente 216 pour l'introduction de pièces de monnaie dont le montant global détermine le temps de stationnement désiré. Les pièces introduites dans la fente 216 sont contrôlées par un sélecteur de pièces 218 qui détecte le montant effectif introduit dans la fente 216. A partir de ce montant et de l'information de temps présent délivré par le circuit d'horloge 221, le calculateur 219 élabore l'heure limite de stationnement autorisée. Cette heure limite est affichée par le panneau de visualisation 220. Bien entendu, après être passées dans le sélecteur de pièces 218, les pièces de monnaie sont stockées dans un réceptable 222. La borne 212 comporte également, comme cela est connu, des moyens d'impression 224, par exemple du type à tête thermique, capable de délivrer un ticket 226 à l'automobiliste, ce ticket indiquant le montant acquitté et l'heure limite de stationnement.

La borne 212 comporte en outre un clavier à touches 228 permettant à l'automobiliste, avant d'introduire les pièces dans la fente 216, d'introduire dans la machine une information d'identification de son véhicule. Cette information d'identification peut être constituée par la totalité du numéro d'immatriculation du véhicule ou seulement par une partie de ce numéro, ou encore par un nombre identifiant l'emplacement de stationnement où l'automobiliste à laissé son véhicule. Dans ce dernier cas, chaque emplacement doit être délimité et repéré par un nombre. L'information introduire à l'aide du clavier 228 est décodée par le décodeur 230 et mémorisée dans un circuit mémoire 232. Dans le circuit mémoire 232, on mémorise également, avec l'information d'identification du véhicule, l'heure limité de stationnement de ce véhicule, cette information étant prélevée à partir de l'indication fournie par le calculateur 219. Ainsi, la mémoire 232 comporte des couples d'informations, chaque couple étant constitué par une information d'identification d'un véhicule et une heure limite de stationnement autorisée. La borne de stationnement comporte aussi des moyens externes pour lire les informations stockées dans la mémoire 232, ces moyens étant repérés par la référence 234.

La borne de stationnement comporte enfin un circuit 235 de lecture des informations horaires contenues dans la mémoire 232. Ces informations sont lues périodiquement et un circuit 236 compare l'information horaire lue à l'information de temps présent délivrée par l'horloge 221. Si l'information horaire lue est antérieure à l'information de temps présent d'une valeur supérieure à un "délai de grâce prédéterminé", par exemple 3 minutes, le circuit 236 commande l'effacement, dans la mémoire 232 de l'information horaire lue et de l'information d'identification du véhicule. On comprend que les couples d'informations mémorisés dans la mémoire 232 correspondent à des véhicules en stationnement régulier, compte tenu du délai de grâce, à la périodicité de lecture près.

Lorsque des bornes telles que celle décrite en liaison avec la figure 5, sont interconnectées selon la présente invention, ce sont en particulier les informations contenues dans la mêmoire 232 d'une borne qui vont être transmises aux autres bornes et stockées dans leur propre mémoire 232. L'état de la mémoire 232 est modifié en particulier lorsqu'un automobiliste introduit des pièces de monnaie, ce qui correspond au début d'un stationnement. Cette situation provoque le réveil de la boucle d'interconnexion. Par example c'est le signal de commande de l'impression 224 qui provoque la fermeture de l'interrupteur $K_i$ de la borne. La mémoire 232 comporte une zone spécifique dans laquelle restent temporairement mémorisée la nouvelle information à mémoriser. Le signal qui commande le réveil de la boucle d'interconnexion commande également la lecture dans la zone spécifique de mémoire de l'information à transmettre. Le circuit de lecture envoi à la diode émettrice $E_i$ de la borne l'information lue dans la mémoire.

Si maintenant on considère une autre borne à laquelle aucune opération n'a été effectuée et qui recevra donc en mémoire les informations entrées dans une autre borne, le processus est le suivant: le signal de réveil provoque l'alimentation des circuits électroniques de la borne et en particulier le circuit d'écriture dans la mémoire 232 de cette borne. L'information à mémoriser est reçue par le photo-transistor $S_i$ de la borne considérée. Cette information est transmise au circuit d'écriture qui provoque, à son tour, l'enregistrement dans la mémoire 232 de l'information.

En fait, le contenu de la mémoire 232 est également modifié lorsque le circuit de comparaison 236 détecte que l'heure limite de stationnement autorisé est dépassée. Cependant, comme chaque borne de stationnement comporte son propre circuit de comparaison qui est périodiquement activé, l'effacement est effectué en même temps dans la mémoire 232 de chaque borne.

Comme on l'a déjà indiqué, il va de soi que d'autres bornes à mémoire électronique pourraient être interconnectées par le système selon l'invention. En particulier, le paiement de la taxe de stationnement pourrait être acquitté à l'aide de cartes à mémoire électronique ou magnétique pré-payées. Dans ce cas, le sélecteur de pièces 218 est remplacé par un lecteur de cartes, la durée de stationnement étant alors, par exemple, introduite à l'aide du clavier 228.

Ce même type de circuit d'interconnexion est utilisable pour relier entre elles des bornes ou machines à mémoire pour la distribution de titres de transport. Chaque borne comporte une mémoire dans laquelle sont stockées les données relatives aux différents titres de transport délivrés. Une des bornes distributrices de tickets est

7

une borne centrale à partir de laquelle on peut interroger les autres bornes et qui comporte une mémoire ayant une capacité suffisante pour stocker, au moins temporairement, l'ensemble des données mémorisées dans l'ensemble des bornes reliées à la borne centrale.

Il découle de la description précédente que, quel que soit le mode d'interconnexion des bornes de stationnement envisagé, il répond toujours aux impératifs posés au départ, à savoir permettre le transfert des informations entre les différentes bornes de stationnement sans que les liaisons entre les machines doivent être alimentées en permanence et sans que les structures microprogrammées des bornes de stationnement doivent être alimentées en permanence.

**Revendications**

1. Système d'interconnexion de bornes à mémoire ($B_1$, $B_2$, $B_3$ . . ., $B'_1$, $B'_2$ . . ., 212), chaque borne comprenant des circuits de traitement et une mémoire ($C_1$, $C_2$ . . ., 232) pour stocker des informations caractérisé en ce qu'il comprend:

des moyens (10, 12, 14, 16, 18, 20, 22, 26, 28, 52, 54, $K_1$ . . ., $D_1$, $D_2$ . . ., 18', 20', 22', 26', 28') pour relier entre elles lesdites bornes, lesdits moyens de liaison comprenant des moyens formant circuit de réveil (10, $D_1$, $D_2$ . . .) aptes à provoquer, en réponse à l'introduction d'une information dans une desdites bornes, l'activation desdits circuits de traitement et desdites mémoires ($C_1$, $C_2$ . . . 232) des autres dites bornes;

des moyens (12, 16, 26, 28) pour transmettre, par lesdits moyens de liaison, l'ensemble des informations mémorisées dans chacune desdites bornes vers au moins une desdites bornes, lesdits moyens de transmission comprenant des moyens formant circuit de transfert (12), ledit circuit de transfert comprenant pour chaque borne des moyens ($S_1$, $E_1$, $PT_1$, $S'_1$, $D'_1$ . . .) pour transmettre les informations mémorisées dans ladite borne vers au moins une desdites bornes; et

des moyens ($K_1$, $K_2$) pour interrompre ladite transmission dès que l'ensemble desdites informations mémorisées dans chacune desdites bornes ont été transmises vers au moins une desdites bornes.

2. Système d'interconnexion selon la revendication 1, caractérisé en ce que lesdits moyens de transmission (12, 16, 26, 28) permettent la transmission desdites informations sensiblement au fur et à mesure de leur introduction dans une desdites bornes ($B_1$, $B_2$, $B_3$ . . ., $B'_1$, $B'_2$ . . ., 212), vers l'ensemble desdites autres bornes de stationnement.

3. Système d'interconnexion selon la revendication 2, caractérisé en ce que ledit circuit de transfert (12) est couplé audit circuit de réveil (10) par des moyens opto-électroniques (32, 34) et en ce que lesdits circuits de traitement et de mémorisation ($C_1$, $C_2$ . . ., 232) desdites bornes ($B_1$, $B_2$ . . ., $B'_1$, $B'_2$ . . ., 212) sont couplés audit circuit de réveil (10) par des moyens opto-électroniques ($D_1$, $D_2$).

4. Système d'interconnexion selon la revendication 3, caractérisé en ce que lesdits moyens de liaison (14, 16, 18, 20, 22, 26, 28, 52, 54, 18', 20', 22', 26', 28') comprennent plusieurs boucles dans lesquelles sont montées des bornes à mémoire ($B_1$, $B_2$ . . ., $B'_1$, $B'_2$ . . ., 212), chaque boucle comprenant un circuit de réveil (14, 18, 20, 22, 52, 22', 20', 18') et un circuit de transfert (16, 26, 28, 54, 26', 28') alimentables par une source de courant (14, 16, 52, 54), les circuits de réveil et de transfert d'une boucle étant couplés optiquement respectivement avec les circuits de réveil et de transfert d'une autre boucle.

5. Système d'interconnexion selon l'une quelconque des revendications 1 à 4, caractérisé en ce que chaque borne à mémoire est une borne de stationnement payant (212) comportant des moyens (218) pour compter un montant de pièces de monnaie introduites dans la borne et des moyens (219) pour calculer une heure limite de stationnement en fonction dudit montant, ladite heure limite étant introduite dans ladite mémoire (232).

**Patentansprüche**

1. Verbindungssystem für Parksäulen ($B_1$, $B_2$, $B_3$ . . ., $B'_1$, $B'_2$ . . ., 212), wobei jede Säule eine Verarbeitungsschaltung und einen Speicher ($C_1$, $C_2$ . . ., 232) zum Speichern von Informationen umfaßt, dadurch gekennzeichnet, daß es außerdem aufweist:

Mittel (10, 12, 14, 16, 18, 20, 22, 26, 28, 52, 54, $K_1$ . . ., $D_1$, $D_2$ . . ., 18', 20', 22', 26', 28'), um die Säulen untereinander zu verbinden, wobei die Verbindungsmittel Einrichtungen aufweisen, die eine Alarmschaltung (10, $D_1$, $D_2$ . . .) bilden, die geeignet ist, auf die Eingabe einer Information in eine der Säulen hin die Aktivierung der Verarbeitungsschaltungen und der Speicher ($C_1$, $C_2$ . . ., 232) der anderen Säulen auszulösen;

Einrichtungen (12, 16, 26, 28) zum Übermitteln der Gesamtheit der in einer jeden der Säulen gespeicherten Informationen an zumindest eine der Säulen mit den Verbindungsmitteln, wobei die Übermittlungseinrichtungen Mittel beinhalten, die eine Übertragungsschaltung (12) bilden, wobei die Übertragungsschaltung für jede Säule Mittel ($S_1$, $E_1$, $PT_1$; $S'_1$, $D'_1$ . . .) zum Übertragen der in dieser Säule gespeicherten Information an zumindest eine der Säulen; und

Mittel ($K_1$, $K_2$), die dann, wenn die Gesamtheit der in jeder Säule gespeicherten Informationen an zumindest eine der Säulen übertragen sind, die Übertragung unterbrechen.

2. Verbindungssystem nach Anspruch 1, dadurch gekennzeichnet, daß die Übermittlungseinrichtungen (12, 16, 26, 28) die Datenübertragung an die Anordnung der anderen der Parksäulen im wesentlichen in der Reihenfolge ihrer Eingabe in eine der Säulen ($B_1$, $B_2$, $B_3$ . . ., $B'_1$, $B'_2$ . . ., 212) erlauben.

3. Verbindungssystem nach Anspruch 2, dadurch gekennzeichnet, daß die Übertragungsschaltung (12) mit der Alarmschaltung (10) über optoelektronische Mittel (32, 34) verbunden ist, und dadurch, daß die Verarbeitungs- und Speicherschaltungen ($C_1$, $C_2$ . . ., 232) der Säulen ($B_1$, $B_2$ . . ., $B'_1$, $B'_2$ . . ., 212) mit der Alarmschaltung (10) über optoelectronische Mittel ($D_1$, $D_2$) verbunden sind.

4. Verbindungssystem nach Anspruch 3, dadurch gekennzeichnet, daß die Verbindungsmittel (14, 16, 18, 20, 22, 26, 28, 52, 54, 18', 20', 22', 26', 28') mehrere Schleifen aufweisen, an denen die Speichersäulen ($B_1$, $B_2$ . . ., $B'_1$, $B'_2$ . . ., 212) angebracht sind, wobei jede Schleife eine Alarmschaltung (14, 18, 20, 22, 52, 22', 20', 18') und eine Übertragungsschaltung (16, 26, 28, 54, 26', 28') aufweist, die von einer Stromquelle (14, 16, 52, 54) versorgt sind, wobei die Alarm- und Übertragungsschaltungen einer Schleife optisch jeweils mit den Alarm- und Übertragungsschaltungen einer anderen Schleife gekoppelt sind.

5. Verbindungssystem nach einem der Ansprüche 1 bis 4, dadurch gekennzeichnet, daß jede Parksäule eine Säule (212) ist, die Mittel (218) zum Zählen des Betrages des in die Säule eingeworfenen Geldes aufweist, sowie Mittel (219) zur Berechnung einer Parkgrenzstunde in Abhängigkeit von dem Betrag, wobei die Grenzstunde in den Speicher (232) eingegeben wird.

**Claims**

1. A system of interconnecting survey devices with a memory ($B_1$, $B_2$, $B_3$ . . ., $B'_1$, $B'_2$ . . ., 212), each survey device including processing circuits and a memory ($C_1$, $C_2$ . . ., 232) for storing items of information characterised in that it comprises: means (10, 12, 14, 16, 18, 20, 22, 26, 28, 52, 54, $K_1$ . . ., $D_1$, $D_2$ . . ., 18', 20', 22', 26', 28') for interconnecting the said devices, the said interconnecting means comprising means for forming seizure circuits (10, $D_1$, $D_2$ . . .) suitable for provoking, in response to the entry of an item of information into one of said devices, the activation of the said processing circuits and the said memories ($C_1$, $C_2$ . . ., 232) of the other said devices; means (12, 16, 26, 28) for transmitting by means of the said interconnecting means the whole of the memorised information in each of the said devices towards at least one of said devices, the said transmitting means comprising means forming a transmitting circuit (12), the said transmitting circuit comprising, for each device ($S_1$, $E_1$, $PT_1$, $S'_1$, $D'_1$ . . .), means for transmitting the memorised items of information in the said device towards at least one of said devices; and means ($K_1$, $K_2$) for interrupting the said transmission once the whole of said items of information memorised in each of said devices has been transmitted towards at least one of said devices.

2. An interconnection system according to claim 1, characterised in that the said means of transmission (12, 16, 26, 28) permit the transmission of said items of information appreciably in proportion with the rate of their introduction into one of said devices ($B_1$, $B_2$, $B_3$ . . ., $B'_1$, $B'_2$ . . ., 212) towards the whole of said other devices.

3. An interconnection system according to claim 2, characterised in that the said transmitting circuit (12) is coupled to the said seizure circuit (10) by opto-electronic means (32, 34) and in that the said processing and memorisation circuits ($C_1$, $C_2$ . . ., 232) of said devices ($B_1$, $B_2$ . . ., $B'_1$, $B'_2$ . . ., 212) are coupled to said seizure circuit (10) by opto-electronic means ($D_1$, $D_2$).

4. An interconnection system according to claim 3, characterised in that the said connecting means (14, 16, 18, 20, 22, 26, 28, 52, 54, 18', 20', 22', 26', 28') include several loops in which are mounted devices with a memory ($B_1$, $B_2$ . . ., $B'_1$, $B'_2$ . . ., 212), each loop comprising a wake-up circuit (14, 18, 20, 22, 52, 22', 20', 18') and a transmitting circuit (16, 26, 28, 54, 26', 28') capable of being powered by a current source (14, 16, 52, 54), the seizure and transmitting circuits of a loop being respectively optically coupled with the seizure and transmitting circuits of another loop.

5. An interconnection system according to any one of claims 1 to 4, characterised in that each device with memory is a pay parking meter (212) comprising means (218) for counting the sum of coins introduced into the meter and means (219) for calculating the time of expiry of parking as a function of the said sum, the said expiry time being entered into the said memory (232).

## FIG. 2

## FIG.1

FIG.3

BOUCLES 1

BOUCLES 2

EP 0 208 594 B1

# FIG. 4

EP 0 208 594 B1

FIG.5